# EUROPEAN PATENT SPECIFICATION

(11) **EP 1 875 207 B1**
(45) Date of publication and mention of the grant of the patent: **20.10.2010**
(21) Application number: 06701114.8
(22) Date of filing: 13.01.2006
(51) Int. Cl.: G01N 21/53

(54) **PARTICULATE DETECTOR**
PARTIKELDETEKTOR
DETECTEUR DE PARTICULES

(30) Priority: 14.01.2005 GB 0500687
(43) Date of publication of application: 09.01.2008
(73) Proprietor: ETR-Unidata Limited, Normanton West Yorkshire WF6 1QT (GB)
(72) Inventor: ZINDY, Egor, Petrovitch, Heaton Moor, Stockport SK4 4PF (GB); BANN, John, Richard, Derbyshire SK17 9JY (GB); WILLIAMS, Leonard, Frederick, George, Buckingham MK18 4LJ (GB)
(74) Representative: Brandon, Paul Laurence
(86) International application number: PCT/GB2006/000121
(87) International publication number: WO 2006/075171

(56) References cited:
- WO-A-87/03091
- US-A- 3 713 743
- US-A- 3 775 013
- US-A- 5 331 177
- US-A- 5 352 901
- US-A- 5 828 458

## Description

### Field of the Invention

This invention relates to apparatus and methods for the detection of particulates, including monitoring of particulate, and to duct systems.

### Background to the Invention

The presence of particulate is in many situations at least a nuisance and at worst catastrophic or illegal. Particulate can carry impurities into locations where its presence is undesirable. Such locations include industrial plant and the environment including air quality monitoring.

In electricity generating stations, for example, particulate in the inlets to turbines must be kept to a minimum in order to reduce particulate build up on the turbine blades; such build up has to be removed, generally by water spraying, or, if not carried out, leads to a reduction in turbine performance and ultimately blade disintegration with obvious destructive results. In either event, generating time is reduced.

Particulate free conditions in the examples given above should exist in the inlet of gas, often air, into the relevant area. However particulate should not be fed through the outlet of an area. For example, exhaust from power stations, industrial processing including chemical plant processes, should not emit particulate into the atmosphere. Such a practice is environmentally unacceptable and particulate emissions must be kept within approved maximum or legal limits.

In design testing and use of many engine systems, the quantity and type of particulates emitted are a function of the efficiency of the engine. This efficiency may be affected by many factors including ambient temperature and air pressure. Inefficient operation may be wasteful of fuel, may lead to damage to the engine creating further inefficiency, and may be damaging to the environment and or health of operators of the engine system. It would be useful therefore to be able to analyse particulate emission of an engine in order to optimise performance. It would also be a benefit if such a system operated in real-time. It would be a benefit if such a system was capable of feedback to the engine management system allowing performance to be optimised.

Particulate entering or leaving an area is generally reduced by the use of a range of abatement systems, often located in a duct through which gas is supplied to an area or removed from an area. Such abatement systems include, for example, filters, combination of filters, electrostatic precipitators, wet arresters. If the abatement system has been fitted incorrectly or erroneously or in time the abatement system degrades, the efficiency of the abatement system in reducing particulate passing through the abatement system is reduced. It is common practice to replace an abatement system after a given period which is determined by experience of acceptable abatement system performance. It is also found however that an abatement system may fail catastrophically before that period has been exhausted and allow unacceptable passage of particulate through the filter system. This is a particular problem where, for example, the gas flow is very high or where the abatement system comprises a set of filters and one filter in the set should prematurely fail.

Where abatement failure is unacceptable, then abatement system, or one or more failed filters, should be replaced before system lifetime is reached. Such lack of replacement may be associated with
- Cost disadvantages as it reduces proper usage of the filter.
- Wasteful of resources and thus damaging to the environment
- Cost disadvantages as plant downtime will occur more regularly.
- In some instances, increases in the possibility of a loss of containment of the particles and gas that have passed through the abatement system so increasing risk to humans or the environment or the process protected by the abatement system.

In abatement systems, there is frequently a limit to the minimum size of particle that is excluded as particles of a smaller size may cause no problem to the process being protected. Particle counting or signal integration techniques may thus fail as all particles are counted including those which are of no consequence. In many applications the situation is further complicated as the particles that should not be analysed may not have a continuous, stable or known level. Their production may be a function of many complex parameters and may be or appear chaotic. For example, pollen may be of no significance passing through a filter but the variation in pollen on a daily basis would make a particle count or total occlusion measure of little use.

Analysis of total filter failure by conventional means is limited in that damage has already occurred. At the onset of failure the particles passing through the filter may only be just larger than that supposed to be excluded and conventional means may not be able to discern that failure is imminent.

There is therefore a requirement for an apparatus and a method for detecting of particulate suspended in gas in such ducts over the cross-section of the duct. Detecting of particulate on a regular basis also leads to continuous or regular monitoring of a duct so as to detect the presence of transient particulate above its normal zero or low acceptable level and the apparatus of the invention provides such a facility. In these ducts, the normal level of particulate is essentially zero (i.e. particulate free) or at a very low and acceptable level when the abatement system is performing efficiently. The apparatus of preferred embodiments of the present invention avoids an assumption that a small sample of the cross-section represents the whole of the cross-section

A particularly acute problem is associated where the abatement system comprises a set of filters arranged across a large cross-section area duct. Such ducts can be 20 metres square, though more typically are in the region of 5m square. Such sets of filters may be found in for example turbine inlets to electricity generating stations, but are well known in other areas. Other particulate detectors described above generate information about particulate level over the whole of the cross-section of a duct; if an unacceptable level of particulate is so found, then the complete abatement system must be replaced. That total replacement is expensive and likely to be unnecessary in the case of a set of filters because only one such filter in the set may be faulty. There is therefore a need for a particulate detector which will not only detect unacceptable level of particulate within a duct but also determine where an abatement system is failing, for example, which filter in a set of filters is faulty and hence resulting in that unacceptable level of particulate.

However, particulate problems have been encountered with the implementation of particulate detectors for such environments because of the difficulties encountered when equipment needs to be maintained or operated in the duct.

US-A-5 352 901 discloses an apparatus for detecting presence of transient particulate in gas according to the pre-characterising portion of claim 1 hereto.

US-A-3 713 743 discloses an optical turbidimeter including a light source for generating a ribbon-shaped light beam for transmission through a fluid process stream, a first light detector for measuring the intensity of the light beam after passage through the process stream, a second light detector responsive to light scattered in the forward direction by the direct beam, spatial filtering optics for focusing the scattered light only from a center section of the direct beam onto the second detector and electronic signal processing means responsive to the signals generated by the two detectors for developing an output signal proportional to the ratio of the scattered light to the transmitted light beam.

US-A-5 331 177 discloses a turbidity sensor provided with a light source and a plurality of light sensitive components which are disposed proximate a conduit to measure the light intensity directly across the conduit from the light source and at an angle therefrom.

US-A-5 828 458 discloses a fluid turbidity or filter clog sensor comprising a light source and a detector having at least one sensor position to cross a flow path or a filter element in order to improve the correspondence of the light intensity received at the receiver in correspondence with the turbidity level or clogging level occurring in the test cell. The detector preferably includes a direct path sensor, a scattered path sensor positioned to cross the flow path from the transmitter and the reference light sensor communicating with the source outside of the test chamber.

### Summary of the Invention

According to the present invention as defined by claim 1 an apparatus for detecting presence and position of transient particulate in gas within a duct which comprises
(i) at least one emitter of illumination arranged to sweep the illumination over a cross-section of the duct from outside the duct; in which the illumination is arranged to be a collimated beam; and
(ii) at least one detector arranged for detecting presence and position of any sparkle of the illumination from any particulate within the illumination as the beam is being swept over the cross-section of the duct, wherein the detector is mounted externally of the duct; and outside the zone which extends perpendicular from the swept area of the duct; the viewing angle of the detector is offset from the perpendicular to the plane of the swept cross-section and offset to the side of the duct, wherein the detector is synchronised with the emitted beam and the emitter is configured to be swept stepwise through a predetermined scan angle, so that the beam is arranged to be swept over essentially the entire cross-section of the duct.

The viewing angle is from the direction perpendicular to the plane of the swept cross-section of the duct.

Thus for ducts in which the camera cannot be located in the zone projecting the swept area, a solution is provided. In some ducts, a change of angle of the duct can enable the camera to be located in the zone projecting the swept area, but in many applications this is not practical.

By the term "essentially the entire" in respect of the cross-section of a duct is meant that sufficient of the cross-section of the duct is illuminated so that sampling of selected cross sectional portions of the pipework and assumption of approximate homogeneity of particulate concentration are not required and therefore the invention provides accurate and actual detection of the presence of particulate over the whole cross-section of the duct is obtained. The term "essentially the entire" preferably requires that the whole of the cross-section of the duct is illuminated but a few voids may be tolerated. The range of the angle of the illumination should exceed 50%, preferably 80%, most preferably 90%, of the cross-section of the duct.

Thus the viewing angle is substantially offset from the direction of flow of the gas, in use.

The apparatus and method of the invention are useful therefore in not only detecting the presence of transient particulate in gas in the inlet or outlet of an industrial process, suitably after the gas has passed through an abatement system, and in particular upstream in an inlet or downstream in an outlet of that process, e.g. before or after respectively, of e.g. a turbine, but also in determining where a fault lies in the abatement system which allows particulate to pass.

By the term "particulate" in this specification is meant one or more scattering centres as animal, vegetable or mineral material in particle form. In particular the term includes minute particulate material found in the atmosphere and generated within industrial processes and engines. The term "gas" in this specification is meant any gaseous material, in particular air, which does not react significantly chemically with material used in the abatement system.

The apparatus and method of the present invention rely on the detection of sparkle from particulate of illumination to which they are subjected. By the term "sparkle" is meant glitter or glisten of illumination from a particulate. The sparkle may be in any direction as illumination is reflected from the particulate; at least some of the sparkle will be in the direction of the detector. In an area of gas flow, the apparatus of the invention, and its method, enable more accurate determination of particulate suspended in the gas flow over substantially the whole cross-section of the duct. If gas close to the outlet of a filter is essentially laminar, it is preferred that the apparatus of the invention is located in the area of laminar flow. In the apparatus and method of the present invention, synchronisation of the detector with the emitted beam enables essentially only the sparkle along that beam to be detected. This has the advantage that the position of sparkle in the beam and hence failure of a particular region of abatement system, e.g. a filter in an array of filters, to be detected. Additionally sparkle arising from particulate in any other area of a duct will not be detected and hence will not give rise to unwanted detection of sparkle. Hence precise determination of the location of a fault in a particular filter in a planar array of filters is achieved. It will be appreciated that illumination is essentially invisible in gas in which there is no particulate present.

The apparatus of the invention will be located within an inlet or outlet duct which directs gas into or out from a location. The duct may be any closed or semi-enclosed space through which gas may flow, such as for example, a pipe, chimney, tunnel, shaft, aircraft engines. The duct may be constructed from any suitable material known in the art. Examples of ducting include metal, typically, steel which may be coated or uncoated (e.g. galvanised), stainless steel, aluminium; plastics materials, for example rigid or flexible polyvinyl chloride, polypropylene, glass, polystyrene, low or high density polyethylene, ABS and the like; and the ducting may be in concertina form. The ducting may be transparent or opaque. The ducting may be of any convenient or suitable cross-section such as, for example, rectangular (e.g.square), circular, oval, and have any cross sectional size provided that the cross-section can accommodate the emitter and detector. Cross sectional area of a duct is relatively unimportant and the apparatus and method of the invention can be used with any size or shape of duct, although emitter output and detector sensitivity should be optimised to duct parameters. The emitter and/or the detector may be located within the cross-section of the ducting; however, where there is very high throughput of gas, the emitter and the detector are preferably located in the wall of the ducting or adjacent a window (transparent to the illumination) in the ducting wall so that the emitter or detector do not reduce throughput of gas and the risk of any part of the emitter or detector being dislodged and damaging the duct or apparatus is reduced.

Illumination having wavelength from 300nm to 1.5 µm is preferred. Use of shorter wavelengths is beneficial as scattering is maximised. The scattering efficiency of a particle increases inversely with the fourth power of the wavelength of the illumination. However, the wavelength should be selected to reduce the effects of absorption. In environments where significant water vapour or droplets are present this may preclude the use of IR and UV illumination.

In addition to the scattering efficiency, the illumination must be detected and detectors have a wavelength sensitivity. When using solid-state detectors it is common for the detectors to be more efficient towards the red end of the spectrum. When using detectors based on phosphors and electron multiplication the detectors, it is common for the detectors to be more efficiency towards the blue end of the spectrum.

Infrared illumination tends to be considered as more eye-safe than visible/UV lasers as this illumination is strongly attenuated before the retina and the eye is inefficient at focusing IR illumination on the retina. Infrared illumination has a safety limit in that the user cannot easily view the beam and may be unaware of its position or its energisation state.

When using detectors based on semiconductor material it is beneficial if the detector is cooled to reduce thermal noise. The detector, even cooled, may suffer from increased thermal effects if a hot sample is imaged as hot objects give off IR radiation. It is beneficial if the camera contains a filter that blocks all IR illumination above the wavelength the laser is using. It is beneficial if the camera contains a filter that only allows illumination of the wavelength range of the emitter to be detected. This invention is thus not limited to a specific wavelength or detector type. There is a plurality of sources that may be used herein. These include laser diode sources that are available at many wavelengths between 633nm and a few microns. In addition lasers based around yittrium crystals (yittrium aluminium garnate and similar materials) may be pumped by a diode laser with high efficiency and produce stable high power beams in the 1000-1100nm region. The emitter may include harmonically generated light source. YAG lasers can be used to produce emission at wavelengths of the order of 532nm and 355nm using such technologies. Harmonic generation is non-linear effect and pulsed sources typically give greater efficiency. In addition illumination emitting diodes and super luminescent diodes may be used to produce optical sources at a wide range of wavelengths. Thermal optical sources such as arc-lamps may be used to produce highly intense pulses of light or continuous beams. For stable operation using lasers, it is preferable to use a polarised laser source. For stable operation using lasers and to achieve a high quality collimated beam then it is preferable to use lasers of only a single or predominantly a single transverse mode.

A collimated laser beam is one that has been set to have minimum divergence. In practice, arrangement of optics for a collimated beam must critically stable and true collimation may never be achieved. However, it is known in this art that a laser beam focused at a distance which is significantly greater than the scanned distance gives a beam which in terms of this invention may be considered collimated.

The collimated beam may be spherical or non-spherical. The beam shape of a laser is a function of the laser cavity. The method of production of diode lasers gives a cavity which occurs at an electrical junction and therefore the cavity is not symmetric about the axis of light emission and thus the emitted beam is not symmetric, but an ellipse. Typically the ellipse has an aspect ration of 1:2 or greater. This invention is not limited to spherical beams and elliptic or other beam shapes may be used. Aligning the major axis of the ellipse with flow direction maximizes the time the particle is within the beam. Aligning the major axis of the beam transverse to air flow maximizes the cross-section of the duct analysed in a single step. Optics which change an elliptical beam to a round beam may be used but these reduce the total laser intensity and give no significant advantage to the invention

Other laser beam shapes may be defined by the transverse modal nature of the laser. Monomode lasers give minimum divergence and thus an optimum collimated beam. In applications where significant laser power is required and/or in applications where economic lasers are used then multimode lasers may be utilized. Laser beams may be designed to give a defined intensity profile by control of the transverse modes. One such mode pattern is known in the art as a top hat profile and this has the advantage that intensity of illumination is substantially constant across the beam diameter reducing variation in measurement due to a particles position within the beam.

Using a collimated beam has the advantage of generating a high power density within the beam. Scattering is a linear phenomena and thus higher power density gives rise to greater scattering and improved signal to noise. Using a collimated beam allows for smaller optics to be used which gives cost savings. Using a wide collimated beam has the advantage that the divergence of a collimated beam is inversely proportional to the diameter of the beam and thus a wide diameter beam spreads less rapidly with distance from the laser and the variation of illumination across the image is reduced.

The beam size should be optimized for the size of the duct, for larger ducts larger beam diameters and thus reduced divergence is preferable.

Commercial lasers are often produced with laser cavities that give a near collimated beam on output. Typical diameters of standard commercial lasers are in the range of 0.5 -5mm. Beam diameters in this range are suited to most ducts but for larger ducts a beam expander (known in the art) may be used to increase the beam size.

Diode lasers do not give a collimated output and a single lens may be used to define a collimated elliptic beam. Reducing the focal length of the single lens reduces the collimated beam diameter and thus a laser diode module allowing numerous beam diameters by alteration of one lens may be used.

Emitters including lasers may be pulsed and that in pulsed mode the peak energy can often be increased such that the total emitted energy is constant or even increased by pulsing.

Scattering is a linear effect and the amount of illumination detected is a function of the amount of light delivered to the particle as opposed to how long the particle was excited. Thermal noise in a camera is a function of the time of exposure. By means of pulsing the laser, it is possible to reduce the actual exposure time of the camera (using a feedback loop) and thus reduce thermal noise without reduction in the scattered intensity of a particle and this gives benefit.

By delivering the power to the particle in a short time the particle scatters illumination only over a reduced length of flight path and this increases the image resolution of the particle and improves analysis and this gives benefit.

The laser must input sufficient illumination to a particle during its transit to distinguish it from thermal noise. The use of a pulsed laser allows the laser to input more light in a single exposure time than would normally be the case using a CW laser of the same average power and this gives advantage.

Lasers may be selected which self modulate due to their internal characteristics or are modulated externally by control of the laser pumping or of the quality of the cavity (quality of cavity is a technical term known to one skilled in art). It is preferable to use a externally modulated laser such a control device may control the laser, the camera shutter and the means of scanning the laser.

Many lasers are defined by means of operating lifetime in hours. By means of using a modulated laser that is disabled during the scanning of the laser beam and when the system is not acquiring data it is claimed the laser lifetime may be increased and this gives advantage.

The operation may be further reduced by interlacing measurements. For example, an image may be composed of many exposures at each of 100 angles. However the entire 100 angles need not be measured to update the image and a ripple and interlace system may be used such that as each new angle is analysed it replaces the precious image part at that angle and the image is re-displayed and analysed with this new data and the preceding 99 measurements. The image may be made of only a few angles covering the measurement volume range when no dust has been detected and switch to many angles only when the system detects particulate. This allows faster update time or the system/laser to have more dead time. Feedback may be included so that a specific set of angles are measured unless particulate is detected and then the system increases the number of scans within that range.

A preferred emitter is a laser. It has been found that lasers produce intense sparkle from particulate and laser devices have comparatively longer operating life. Suitable laser output may be determined having regard to prospective particulate size and required sensitivity of the apparatus. Visible illumination at shorter end of the visible spectrum, for example, 532nm is preferred as it is less susceptible to interference to moisture than for example illumination at the longer end of the visible spectrum, for example, 780nm, although illumination in the whole of the spectrum can be used. Matching of a single frequency emitter with a detector specific for that frequency results in greater signal to noise ratio in detection and hence greater sensitivity of the apparatus of the invention. The duct may be provided with a beam dump to absorb illumination, in particular illumination from a laser, on the side of the duct opposite to the emitter so that illumination is not reflected back from the opposite side of the duct.

The laser or optics following the laser may include filters to remove unwanted light. Illumination other than that required may be emitted by a laser by spontaneous emission or may be emitted as leakage from laser pump sources. The filters may include optical filters. The filters may include spatial filters. One or more of the detectors may be fitted with filters to reduce light from outside the area of interest. One or more detectors may be fitted with a filter to reduce IR detection at frequencies below that of the laser which may cause thermal noise. The detector may include a polarised filter which may be polarised parallel or orthogonal to the illumination source. The detector may be cooled to reduce thermal noise by, for example, a solid state device or a Peltier cooling device. The detectors may be include a hoods to minimise unwanted illumination. The hoods may be fitted with baffles to minimise unwanted illumination.

Depth of focus of the detector may be controlled such that illumination scattered within the plane of the scanned laser is detected preferentially over illumination originating from outside this plane. The optics of the detector may be provided to make the depth of view a limited extent by means of use of a pinhole or iris or other means.

A band pass filter may also be provided to reduce any effect of non-emitter emitted illumination. The emitter should provide a collimated beam of illumination, the narrower the beam generally the better because that will provide more accurate determination of any sparkle and improved signal to noise ratio.

The emitter is arranged to sweep illumination stepwise across the entire cross-section of the duct; it may be swept by use, for example, of a lens, mirror or of a prism, which may be moved or rotated by a stepper motor by essentially continuous stepped movement through a desired step angle. Where the duct has large cross-section area, it is preferred to increase the number of steps. In such an arrangement, the illumination is directed onto the prism or mirror for the illumination to be swept; however it is preferred that the illumination emitter, for example, a laser is attached directly to the stepper motor. Whilst it is preferred to use a single emitter of illumination, a plurality may be used, in particular where the cross sectional geometry of the duct is irregular, or the duct structure is not regular.

Mechanical scanning of the beam from the emitter by means of, for example, a lens or an essentially continuous mechanically moved mirror enables the beam to be swept stepwise through a desired scan angle. Typically a mirror is controlled with a servo galvanometer or a stepper motor, the latter being preferred where mechanical robustness of the apparatus is required; an additional advantage of a stepper motor is that information relating to the position of the emitter beam can be used to mask out any spurious signal. The advantages of such a system enable a constant intensity along the length of the beam (excluding any absorption), maintain high intensity i.e. little spreading of the beam other than normal divergence, and scanning parameters such as sweep angle, sweep rate and step rate can be easily controlled. In general, the stepper will be free running although from the parameters of the system, the position of the beam is known; however position of the beam may be fed back for analysis and further control of position if required.

The sweep duration may be a rate of from tens of sweeps per second to a few per minute; longer sweep times allow for very sensitive detection of small particulate trails because a longer dwell time in each position allows for a greater number of images to be taken thus enabling increased sensitivity and the detection of smaller particles. Small sparkles detection can be integrated over a period of seconds to facilitate measurements of particulate of greater reliability and reproducibility; faster sweep rates generally allow quicker remedial action in the event of catastrophic abatement system failure. Typical sweep times will be in the range 1 to 20 times per minute, with between 1 and 100 emitter outputs per sweep but such parameters are dependent upon the sensitivity of the emitter and detector and the prospective particulate

A sparkle will appear as a detected peak of light intensity from a single output from a detector; however if, as is preferred, there are a plurality of outputs from a detector at each step, the output from the detector will be an average of the individual peaks from different particulate particles. That average will appear to reduce the total output caused by sparkle from the detector at each step so that noise in the apparatus may tend to mask substantially the detected sparkle. Accordingly it is desirable to reduce the effect of background noise in the averaging of the detected sparkle. At least one threshold means may be used to reduce the noise. Noise may be due to any part of the system including, but not exclusive to, thermal noise within the detector system, thermal noise in the detector amplifier or other readout means, thermal noise present due to imaging of heat in the duct, light reflected off items within the duct, secondary scatter where light is scattered by a dust particle and then reflected from the duct or an item within it.

There are a plurality of ways of setting a threshold.

The threshold may be the average value of all the pixels within an area of the exposure or within an area of all the exposures at that step angle or within an area of all the pixels within that image.

Use of defining the threshold to an area of the image/exposure/scan allows for brighter areas of an image due to reflection from the dust or parts within the duct.

The value of the threshold may be defined by a function that may be linear or non-linear applied to an area of an exposure/s.

The threshold may be defined from previously recorded images. The image may be an image recorded when no dust was present. The image may be the integration of a significant time when particulate was present such that the effects of particulate have been averaged out. A long integration time may be produced by the summation of many exposures or the use of a single or lower number of long exposures. The threshold may be defined by averaging a defined number of the preceding images of that scan angle such that the threshold is stable but constantly updated.

The threshold may be used in the determination of the presence of particulate by use of comparison where any significant change in the image from the threshold value/s suggests particulate loading has changed.

A further way of reducing a threshold is by consideration of where the laser beam is within the image. A spatial threshold may be applied where only points lying within the extent of the laser beam are defined as signal and points lying outside this regime are considered noise. A spatial threshold may be used to produce a magnitude threshold. The area outwith the extent of the laser beam may be analysed and at least one parameter of the pixel values defined. This may be a peak value, a mean value , a median value or some other mathematically defined value.

All pixels in the image may be defined as zero if they have a value below this threshold. Pixels outwith the laser beam may also be defined as zero. Thus in this case a threshold acts by means of a logical operator which defines if a multiplication is by 0 or one.

The threshold may involve temporal information. For example, the analysis may involve the consideration in the variation of one or more pixels over a series of exposures taken sequentially and where a pixel has a significant value in in a majority of exposures, then it be deemed due to noise whereas if the pixel has a significant value in only one or a low number of exposures it be deemed the signal was due to particulate.

Analysis may involve subtraction of one or more thresholds. Analysis may involve the analysis of a number of thresholds. For example, the analysis may consider a historical threshold defined on apparatus installation and a threshold defined by the preceding 100 exposures of that scan angle. In this manner the change in the system from installation or calibration may be analysed as well as the change in the system from preceding measurements.

The analysis may include a second threshold where exposures following summation of the exposures at a particular step angle to further reduce noise or simplify analysis.

The detector may be any suitable detector that is capable of detecting sparkle of illumination from particulate. Suitable detector systems include for example, cameras, phototransistors and pin diodes. A suitable camera should have appropriate sensitivity and spatial resolution that is a function of the number of pixels. The detector may be fitted with an optical filter or filters so that, for example, a filter may render a camera insensitive outside the narrow wavelength of the illumination. Preferably a single detector or phototransistor system may be provided but a plurality of detector systems is not excluded. Output from the detector system during movement of the emitter from one step position to the next is disregarded; such disregarding has no significant effect on detection.

The relative positioning of the emitter and detector may be optimised and dependent upon the type of detector used. For example, it is preferable for the camera field of view to be offset from the line of direction of the emitter so enabling a two dimensional picture of the illuminated plane to be obtained. However if a detector is located adjacent the emitter so that a beam is sent across the duct, the sparkle detected will be that reflected back (back scatter); however positional information regarding the particulate could not be determined in two dimensions. With the emitter located outside the duct; the map described above represents a distorted or warped two dimensional picture of the duct, a so-called perspective warping. In order to map co-ordinates from the actual abatement system to the perspective warped view, well known algorithms may be used (for example:- Wolberg, Digital image warping 1990, IEEE Computer Society Press, 1990; Performance Metrics for Robot Coverage Tasks, Sylvia C Wong et al, Proceedings 2002 Australasian Conference on Robotics and automation, Auckland 27-29 November 2002, pages 7 to 12).

The detector maintains focus on the beam as the beam is swept over the cross-section of the duct; in this way the detector detects sparkle resulting from each stepped position of the collimated beam. Thus, as the beam sweeps across the duct, and sparkle from each position is detected. From the information on sparkle so detected, a two dimensional map of any particulate detected across the duct is produced on a recorder. This map then shows which part of the abatement system is failing to prevent passage of particulate.

The determination of the particulates may include the summation of area of a final image and may include the summation of an area or volume within a final image. The determination may include count of the number of peaks. The analysis may include the production of a distribution of the some parameter of the peaks. The parameter may be magnitude, area or volume. The analysis may include analysis of the distribution shape

The determination may include further threshold values such that when a specific magnitude change to one or more defined parameters has altered a trigger is caused due to a substantial change in the system.

The method of using a scanned laser from the edge of the duct defines that the total energy density delivered by the laser within a scan reduces with the square of the distance from the laser position, for a perfectly collimated beam. Using a collimated beam, all particles have the same incident flux but there is greater overlap of beams at the different step angles closer to the laser such that more particles will be measured. Preferably the determination step includes the step of normalizing the image or the result of the image according to the energy density delivered to the area.

The method of imaging the scanned laser from the edge of the duct causes distortion in the image. Preferably the determination step includes the removal or reduction of distortion from the image.

Preferably the method of the invention includes the step of setting up at least one calibration target to allow analysis of the gain of the image system and includes a second normalization step of normalizing the exposure according to the gain of the system. Preferably this normalization occurs for each scan angle as opposed to the overall image. Most preferably this normalization occurs for each exposure as opposed to the overall sum of all exposures.

In this invention the gain of the image system is defined as the overall gain and takes into account laser fluctuation as well as dirt on windows and detector sensitivity variations and any other change that affects the measured signal magnitude.

According to a further aspect of the present invention therefore, a method as defined by claim 20 is provided for detecting presence of particulate in gas within a duct.

Suitably, the method further comprises:
(i) setting a threshold level,
(ii) summing the detected level of sparkle from the detector at each step of the beam, and
(iii) recording the detected sparkle, and
(iv) determining presence, quantity and position in the duct of any particulate present.

It will be appreciated that the apparatus and method of the invention is capable of being used in various environments, for example, in ducts of different dimensions, for detecting particulate of varying particle size and for gas having a range of flow rates in the duct. The parameters associated with the invention should be optimised for each environment. In general, in accordance with the invention, the exposure time capable of detecting a particle in particulate should be maximised so as to improve chance of its detection. A number of generalities can be made -

Exposure time should be in the order of particle transit time across on emitter beam.

Exposure time must differentiate signal from noise

Detector output should be adjusted to remove noise, preferably by adjusting threshold.

Possibility of detecting sparkle is increased by increasing emitter output power, but any associated noise generation should be minimised.

The recorder may be any instrument capable of providing information on particulate passing through a duct. The recorder may be, for example, any visual display unit which has a persistence long enough to produce a plan-position indication of the stepped sweeps over the duct cross-section. In another type of recorder, the detector system provides an X-Y matrix of the cross-section of the duct, the matrix being preferably corrected from its perspective warped view to the co-ordinates of the duct. In yet another type of recorder, an acceptability limit for particulate concentration may be set above which would indicate unacceptable concentration of particulate, for example, abatement system failure. Said failure may be due, for example, to poor performance of one or more abatement system elements. The position of that failure may then be displayed on, for example, a LED or LCD display on a industrial plant control panel and/or accompanied by a warning noise generator, for example, a claxon. In yet another embodiment of the present invention, the recorder may be a feedback loop which activates a management system, for example, an engine management system, so as to correct performance to take account of failure.

Additionally, in accordance with use of the apparatus and method of preferred embodiments the present invention, as particulate pass through the, for example, laser light, a small flash of light reflected back, i.e. sparkle, is detected by the detector system. Although the amplitude of the sparkle will differ for each dust particle because of differences in particle size and refractive index, (and also any dirt on the optics), the rate and duration of the sparkles can be used to determine particulate flow and particulate content. Therefore the rate and duration of sparkles may be logged, and the amplitude of the light sparkled may be an indication of particulate intensity. The rate and duration of the sparkles may then be recorded by for example, summation, so as to give an indication of the quantity of particulate in the duct, in addition to determining where the particulate is actually passing through the abatement system..

In setting up and using the apparatus and carrying out the method of the invention, it is convenient to provide a matrix of the X-Y cross-section of the duct, suitably on a computer, feed the recorded images of the sparkle to that matrix from the detector having regard to the position of the illumination during the sweep of the duct. In this way a map of the abatement system and its effectiveness in preventing passage of particulate may be obtained. It is preferred that in setting up the apparatus and using the method to detect the presence of particulate, that the apparatus and duct are first used in the known absence of particulate so that a base line condition can be obtained for comparison with results when in operation.

The invention extends to the incorporation of the apparatus and use of the method in a duct system.

Further features of the present invention are set out in the appended claims.

### Brief Description of the Drawings

The present invention will now be described, by way of example only, with reference to the accompanying drawings; in which:
Figure 1 is a schematic plan view of a duct incorporating a detection apparatus according to the present invention.
Figure 2 is a perspective view of a detail of Figure 1.
Figure 3 is a typical plan position indicator.
Figure 4 is an illustration of scatter from a particulate.
Figure 5 is an illustration of the images of Figure 4 after some image processing.
Figure 6 is a view of an abatement system divided into a 10 x 10 matrix.
Figure 7 is a mapping of the array of Figure 6.
Figures 8 and 9 are view corresponding to Figure 7, but with a particulate stream present.

### Description of the Preferred Embodiments

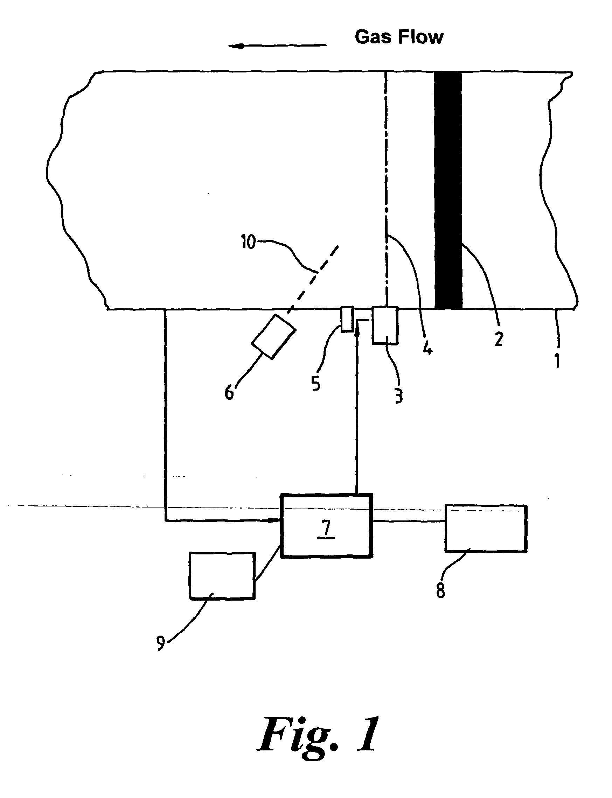

Figure 1 shows a plan view of a duct (1) fitted with an apparatus according to the present invention. An abatement system (2) comprises a bank of filters arranged in a honeycomb format across the whole cross-section of the duct. A laser (3) having a continuous wave beam of 20mW, a collimated elliptical beam having aspect ratio approximately 2mm x 4mm, provides illumination at a wavelength 660nm (red), the beam (4) of which is directed across the entire cross-section of the duct across the down steam side of the abatement system. The beam is swept across the duct in a place parallel to the filters by a stepper (5) which comprises the laser located on a shaft of a gearbox from a stepper motor; the stepper motor has a step angle of 1.8° (half step mode 0.9°), step angle accuracy 5%, voltage 5V, rated current 0.5A/phase. The gearbox scans essentially the entire cross-section of the duct; ratio 100:1. This scanning arrangement was found to be robust, vibration proof, capable of scanning over a wide temperature range, over a range of scanning speeds with repeatable positional information.

The duct (1) is preferably an electric generation turbine duct.

A zone projecting a swept area of the duct extends perpendicular from the swept area so in this embodiment will include essentially the entire volume of the duct.

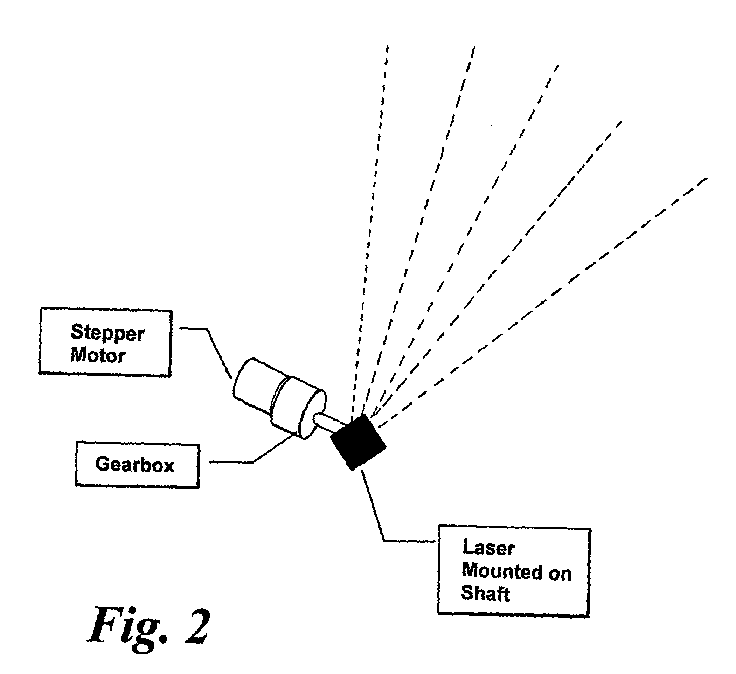

Figure 2 shows the scanning arrangement in greater detail.

Sparkles from any particulate in the duct are detected by a C/CS mount CCD camera (Type 1004XA, RF Concepts Limited, Belfast, N.Ireland BT16 1QT)(6) having a 12mm Compatar lens having 1:1.2 field of view, the centre of its field of view about at an angle of 45° across the duct. The viewing angle (10) is substantially offset from the direction perpendicular to the plane (4) of the sweep of the beam. In relation to a 5 metre square duct, the camera is approximately 3 metres from the plane of the upper edge of the abatement system. It is then offset to the side of the duct. Both the emitter and the camera are located outside the wall the wall of the duct. The camera is located downstream of the laser which is itself downstream of the abatement system. The detector direction is non-perpendicular to the plane of the sweep of the beam.

In an alternative embodiment, the camera is located upstream of the laser and faces downstream; this arrangement may be preferred because any particulate in the gas is less likely to foul the camera and may reduce reflections and thus noise due to scattering of light from the abatement system. However this reduces spatial resolution of the apparatus due to laminar flow decrease and/or diffusion of the particulates

For each step of the emitter beam as it sweeps the duct cross-section, an image of sparkle is obtained; that image is unique to the position of the illumination beam only. For each step, output from the detector camera is then fed to a recorder (7) which is synchronised with its timebase to the position of the beam of illumination from the emitter with an output from the detector camera so that an intensity figure for sparkle from any particulate along that beam is obtained. This process is repeated for each step as the emitter beam is swept across the duct.

It is convenient to define the geometry of the duct in advance of using the apparatus and method of the invention in terms of X-Y co-ordinates across the duct. An array of sparkle intensity can therefore be correlated with X-Y co-ordinates of the duct cross-section to form images or maps of particulate in the duct. With this information the performance of individual filters in an abatement system can be monitored and any deterioration in performance of one or any filter can be detected.

In order to use the present apparatus and method, it is desirable first to run a set up the apparatus to ensure that the emitter, detector and synchroniser are working in concert. Then airflow into the duct can be commenced without any introduction of particulate. Typically the airflow will be continued for a few minutes to allow the apparatus to settle any residual particulate on the duct and any transient effects to diminish. The method of the invention was then commenced over a period of 10 seconds at each step; at each step 100 images were detected to produce consolidated images from each of 50 emitter steps.

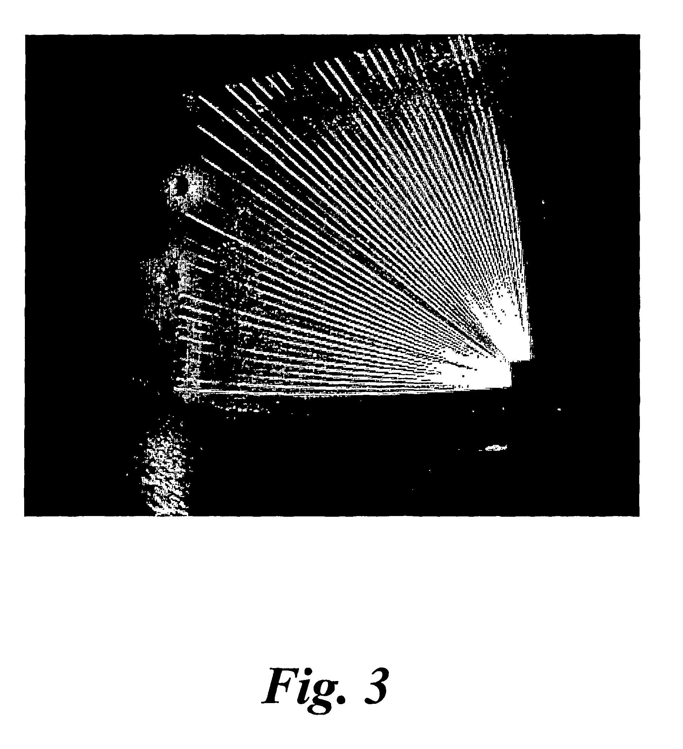

A typical plan-position indication from a recorder is shown in Figure 3 following processing described below.

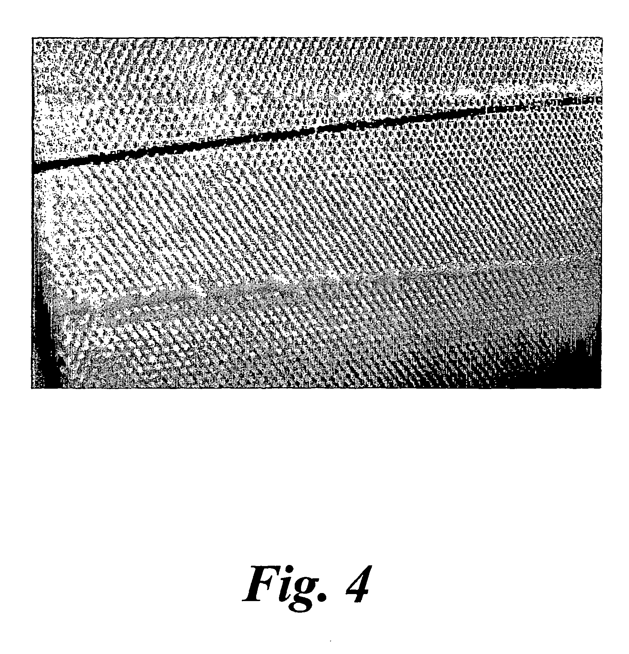

Figure 4 illustrates scatter from particulate from a single laser beam over 100 exposures. The honeycomb background is a protective grid over a element of a filter bank. The two fuzzy lines are areas of adhesive on the mesh face of the filter.

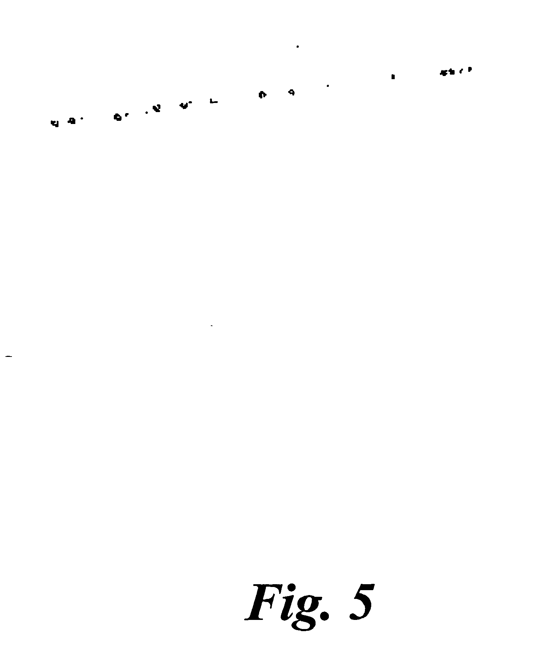

It will be understood that the detected image may contain a large number of sparkles both within and outside the laser beam. The threshold is also set manually to reduce sparkles occurring outside the beam and applied to the entire image so as further to reduce noise. Any sparkle below that threshold level is therefore disregarded. Figure 5 shows a single exposure from which background noise has been thresholded.

Thresholding was carried out by averaging 100 exposures at a single stepper position to determine noise which was then subtracted from a single exposure to produce Figure 5.

Noise is then further reduced and bias reduced by cross correlation of each pixel with a Gaussian of half width of 3 pixels. Correlation is a numerically complex analysis and time consuming but as the Gaussian is symmetric about the axis, the correlation may be carried by convolution. Convolution in two dimensions is itself not trivial but the analysis is separable and processing may be carried out as a sequence of convolutions in each dimension.

The image is then analysed by processor 8 for the number and magnitude of sparkling centres by means of a peak detection algorithm. The algorithm uses a sliding mask of dimension 5 x 5 pixels. This mask is applied to every pixel in the image and if the centre of the mask is the maximum of the mask then this pixel is defined as a peak and the X-Y position recorded. If the X-Y position lies outwith the extent of the laser beam then this centre is ignored as noise. The method then allows each scattering centre to be defined by and X-Y position and a magnitude reducing data significantly.

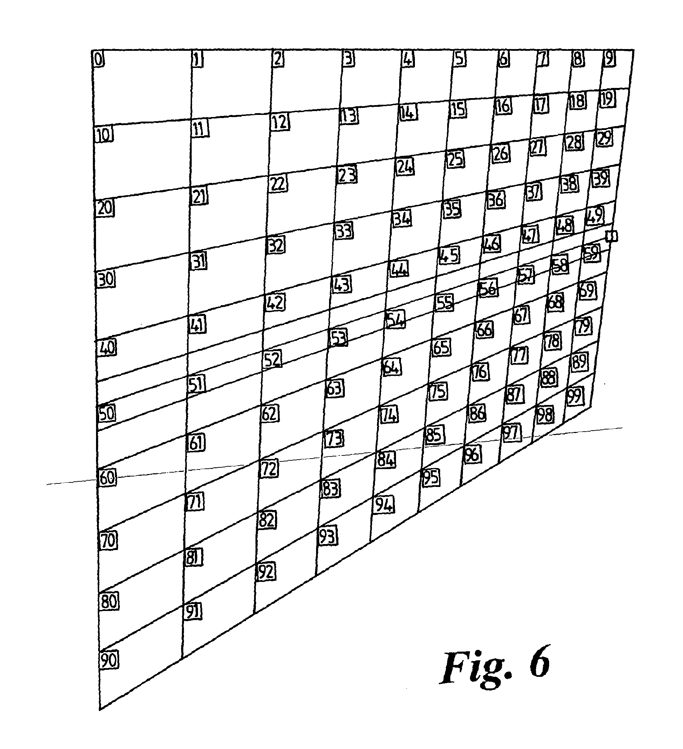

Figure 6 shows a view of an abatement system sectioned into a 10 x 10 matrix as a perspective warped view as seen by a detector. This view is converted in to the real geometry of the particulate system using the method of Wolberg described above by image adjuster (9); such a method is also used to map the laser position into distorted images. The line shown in Squares 40 to 49 and in squares 50 to 59 show position of two beams from a laser.

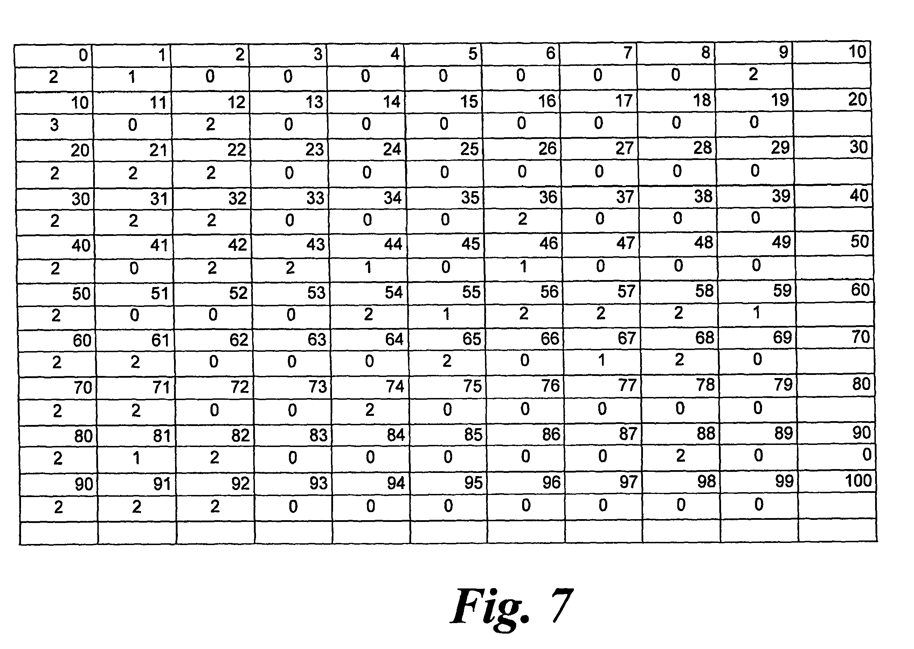

A typical map of a duct having a square cross-section, split into a 10 X 10 array is shown in Figure 7 in which each square is numbered from 0 through to 99. The array represents a X-Y map across a duct corrected from the perspective warped view of the duct from the output of the detector. In the map of Figure 7 is presented a scan when no particulate was deliberately introduced into the duct; the digits in the centre of each square of the array represents a relative density of any particulate in the duct using a scale of 0 indicating no particulate through to 9 which indicates heavy concentration of particulate. It can be seen that particulate was present only in low concentration over part of the duct. This map is used as a baseline.

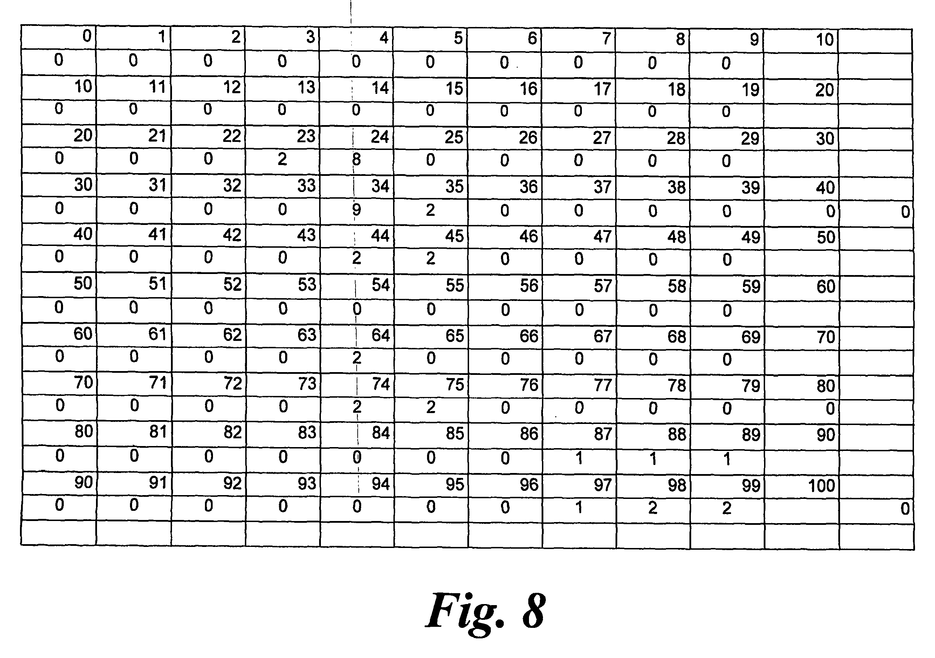

Figure 8 shows a map similar to that of Figure 7 of a scan when a continuous injection of particulate was introduced in to the duct. The particulate did not follow a narrow stream but tended to be spread over a large portion of the duct cross-section as shown by the digits on the map.

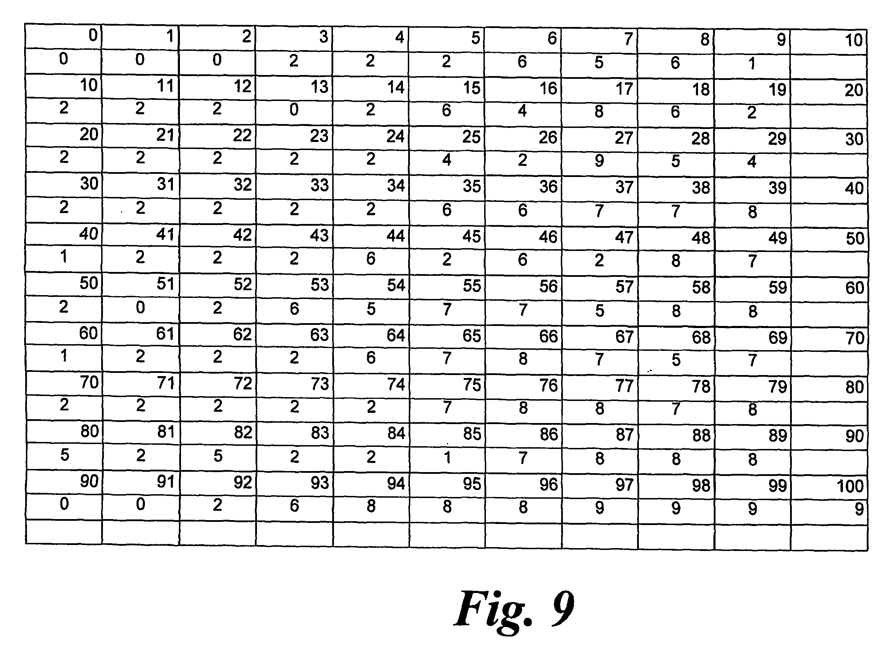

Figure 9 shows a map similar to that of Figure 7 of a scan in which particulate was injected in a particular section of the abatement system across the duct using a hand pumped particulate source; it can be seen that a heavy concentration of particulate was found at square 24 and 34. This shows that the apparatus and method of the invention can detect particulate at specific points in the output of an abatement system. The maps of both Figures 8 and 9 take into account the baseline condition shown in Figure 7.

The maps represented by Figures 7, 8 and 9 in which digits denote the relative concentration of particulate at the various squares in the duct can be replaced by a map having different colours and shades, rather than digits, to denote particulate density; for example no colour (white) can denote absence of particulate, light blue slight particulate concentration, through to green, yellow, orange, and red, the last denoting heavy concentration of particulate.

## Claims

1. An apparatus for detecting presence and position of transient particulate in gas within a duct (1) which comprises
(i) at least one emitter (3) of illumination (4) arranged to sweep the illumination over a cross-section of the duct from outside the duct, in which the illumination is arranged to be a collimated beam; and
(ii) at least one detector (6) arranged for detecting presence and position of any sparkle of the illumination from any particulate within the illumination as the beam is being swept over the cross-section of the duct,
wherein the detector is mounted externally of the duct; and outside the zone which extends perpendicular from the swept area of the duct; the viewing angle of the detector is offset from the perpendicular to the plane of the swept cross-section and offset to the side of the duct, wherein the detector is synchronised with the emitted beam and the emitter is configured to be swept stepwise through a predetermined scan angle, so that the beam is arranged to be swept over essentially the entire cross-section of the duct.

2. An apparatus as claimed in claim 1, in which the detector is focusable on the illumination.

3. An apparatus as claimed in claim 1 or claim 2, in which there is further provided a recorder (7) for any sparkle detected in the illumination as the beam (4) is swept across the duct (1).

4. An apparatus as claimed in any preceding claim, in which there is further provided an image adjuster configured to adjust the image received by the detector (7) to account for the image being received outside a duct (1).

5. An apparatus as claimed in any preceding claim in which the emitter (3) is a laser.

6. An apparatus as claimed in claim 5 in which the laser (3) provides illumination at 660nm.

7. An apparatus as claimed in any preceding claim which includes a stepper motor (5) to sweep the emitter beam stepwise across a duct (1).

8. A apparatus as claimed in claim 7 in which the emitter (3) is attached to a shaft of the stepper motor (5).

9. An apparatus as claimed in any preceding claim in which the detector (6) is a camera tuned to the wavelength of the emitter (3).

10. An apparatus as claimed in any preceding claim which includes means for thresholding level of noise in the apparatus which may tend to mask detected sparkle.

11. An apparatus as claimed in any preceding claim in which the recorder (7) is a warning claxon.

12. An apparatus as claimed in any one of claims 1 to 11 which includes a feedback loop for activating a management system which may correct performance to take account of abatement system failure.

13. An apparatus as claimed in any preceding claim in which means are provided for correcting perspective warped view of the duct (1) from the output of the detector (6).

14. An apparatus as claimed in any preceding claim in which the emitter (3) is located outside the duct (1).

15. A duct system comprising a duct (1), an abatement system (2) at least partly within the duct and an apparatus for detecting presence of transient particulates in gas within the duct according to any preceding claim.

16. A duct system according to claim 16 in which the viewing angle of the detector (6) is offset from the perpendicular to the plane of the swept cross-section by at least 20°, preferably 30° and more preferably 40°.

17. A duct system according to claim 16 or claim 17 in which the duct (1) comprises a turbine inlet.

18. A duct system according to claim 18 in which the turbine inlet is of an electric generation turbine.

19. A method for detecting presence and position of particulate in gas within a duct (1) which comprises
(i) sweeping the duct with a beam of collimated illumination (4) from at least one emitter (3) of illumination over a cross-section of the duct,
(ii) using at least one detector (6) for detecting presence and position of any sparkle of the illumination from any particulate within the illumination as the beam is being swept over the cross-section of the duct, where the detector is mounted externally of the duct and outside the zone which extends perpendicular from the swept area of the duct; the viewing angle of the detector is offset from the perpendicular to the plane of the swept cross-section and offset to the side of the duct, wherein the detector is synchronised with the emitted beam and the emitter is swept stepwise through a predetermined scan angle so that the beam is swept over essentially the entire cross-section of the duct, and
(iii) detecting any sparkle of the illumination from the particulate, whereby presence and position in the duct of any particulate present is determined.

20. A method as claimed in claim 20 which includes the step of setting a threshold level for detection noise.

21. A method as claimed in claim 21 in which the threshold is at least in part spatially defined.

22. A method as claimed in either claim 21 or 22 in which the threshold is at least in part temporally defined.

23. A method as claimed in any one of claims 20 to 23 which includes the step of summing the detected level of sparkle from the detector at each step of the beam when there is more that one detector output at a given step.

24. A method as claimed in any one of claims 20 to 24 in which the beam (4) is swept at a rate of 1 to 20 per minute, with between 20 and 100 emitter (3) steps per sweep.

25. A method as claimed in any one of claims 20 to 25 in which the beam (4) is swept with between 20 and 100 emitter steps per sweep.

26. A method as claimed in any one of claims 20 to 26 which includes the step of correcting the display from perspective warped view to X-Y co-ordinates of a duct (1).

## Patentansprüche

1. Vorrichtung zum Erfassen von Vorhandensein und Position transienter Teilchen in Gas im Inneren einer Leitung (1), die umfasst:
I) wenigstens eine Einrichtung (3) zum Emittieren von Beleuchtung (4), die so eingerichtet ist, dass sie mit der Beleuchtung einen Querschnitt der Leitung von außerhalb der Leitung überstreicht, wobei die Beleuchtung so eingerichtet ist, dass sie ein kollimierter Strahl ist; und
II) wenigstens eine Erfassungseinrichtung (6), die so eingerichtet ist, dass sie Vorhandensein und Position von Funkeln der Beleuchtung von Teilchen innerhalb der Beleuchtung erfasst, wenn der Querschnitt der Leitung mit dem Strahl überstrichen wird,
wobei die Erfassungseinrichtung außerhalb der Leitung und außerhalb der Zone angebracht ist, die sich senkrecht von dem überstrichenen Bereich der Leitung erstreckt, der Sichtwinkel der Erfassungseinrichtung gegenüber der Senkrechten zu der Ebene des überstrichenen Querschnitts versetzt ist und zur Seite der Leitung versetzt ist, und die Erfassungsesnnchtung mit dem emittierten Strahl synchronisiert ist und die Emissionseinrichtung so eingerichtet ist, dass sie schrittweise einen vorgegebenen Abtastwinkel so überstreicht, dass der Stahl so eingerichtet ist, dass im Wesentlichen der gesamte Querschnitt der Leitung damit überstrichen wird.

2. Vorrichtung nach Anspruch 1, wobei die Erfassungseinrichtung auf die Beleuchtung fokussiert werden kann.

3. Vorrichtung nach Anspruch 1 oder Anspruch 2, wobei des Weiteren eine Aufzeichnungseinrichtung (7) für jegliches Funkeln vorhanden ist, das in der Beleuchtung erfasst werden, wenn die Leitung (1) mit dem Strahl (4) überstrichen wird.

4. Vorrichtung nach einem der vorangehenden Ansprüche, wobei des Weiteren eine Bild-Anpassungsemnchtung vorhanden ist, die so eingerichtet ist, dass sie das durch die Erfassungseinrichtung (7) empfangene Bild anpasst, um zu berücksichtigen, dass das Bild außerhalb einer Leitung (1) empfangen wird.

5. Vorrichtung nach einem der vorangehenden Ansprüche, wobei die Emissionseinrichtung (3) ein Laser ist.

6. Vorrichtung nach Anspruch 5, wobei der Laser (3) Beleuchtung bei 660 nm erzeugt.

7. Vorrichtung nach einem der vorangehenden Ansprüche, die einen Schrittmotor (5) enthält, mit dem eine Leitung (1) schrittweise mit dem Strahl der Emissionseinrichtung überstrichen wird.

8. Vorrichtung nach Anspruch 7, wobei die Emissionseinrichtung (3) an einer Welle des Schrittmotors (5) angebracht ist.

9. Vorrichtung nach einem der vorangehenden Ansprüche, wobei die Erfassungseinrichtung (6) eine Kamera ist, die auf die Wellenlänge der Emissionseinrichtung (3) abgestimmt ist.

10. Vorrichtung nach einem der vorangehenden Ansprüche, die eine Einrichtung für Schwellenwert-Festlegung des Rauschpegels in der Vorrichtung enthält, durch den möglicherweise erfasstes Funkeln abgedeckt wird.

11. Vorrichtung nach einem der vorangehenden Ansprüche, wobei die Aufzeichnungseinrichtung (7) ein Warnhorn ist.

12. Vorrichtung nach einem der vorangehenden Ansprüche, die eine Rückführschleife zum Aktivierten eines Verwaltungssystems enthält, das Leistung korrigieren kann, um Ausfall eines Unterdrückungssystems zu korrigieren.

13. Vorrichtung nach einem der vorangehenden Ansprüche, in der eine Einrichtung zum Korrigieren perspektivisch verzerrter Ansicht der Leitung (1) in dem Ausgang der Erfassungseinrichtung (6) vorhanden ist.

14. Vorrichtung nach einem der vorangehenden Ansprüche, wobei sich die Emissionseinrichtung (3) außerhalb der Leitung (1) befindet.

15. Leitungssystem, das eine Leitung (1), ein Unterdrückungssystem (2) wenigstens teilweise innerhalb der Leitung sowie eine Vorrichtung zum Erfassen des Vorhandenseins transienter Teilchen in Gas innerhalb der Leitung nach einem der vorangehenden Ansprüche umfasst.

16. Leitungssystem nach Anspruch 16, wobei der Sichtwinkel der Erfassungseinrichtung (6) gegenüber der Senkrechten zu der Ebene des überstrichenen Querschnitts um wenigstens 20°, vorzugsweise 30° und noch besser vorzugsweise 40° versetzt ist.

17. Leitungssystem nach Anspruch 16 oder Anspruch 17, wobei die Leitung (1) einen Turbineneinlass umfasst

18. Leitungssystem nach Anspruch 18, wobei der Turbineneinlass der einer Stromerzeugungsturbine ist.

19. Verfahren zum Erfassen von Vorhandensein und Position von Teilchen in einem Gas innerhalb einer Leitung (1), das umfasst:
I) Überstreichen der Leitung mit einem Strahl kollimierter Beleuchtung (4) von wenigstens einer Einrichtung (3) zum Emittieren von Beleuchtung (4) über einen Querschnitt der Leitung,
II) Verwenden wenigstens einer Erfassungseinrichtung (6) zum Erfassen von Vorhandensein und Position von Funkeln der Beleuchtung von Zeichen innerhalb der Beleuchtung, wenn der Querschnitt der Leitung mit dem Strahl überstrichen wird,
wobei die Erfassungseinrichtung außerhalb der Leitung und außerhalb der Zone angebracht ist, die sich senkrecht von dem überstrichenen Bereich der Leitung erstreckt, der Sichtwinkel der Erfassungseinrichtung gegenüber der Senkrechten zu der Ebene des überstrichenen Querschnitts versetzt ist und zur Seite der Leitung versetzt ist, und die Erfassungseinrichtung mit dem emittierten Strahl synchronisiert ist und die Emissionseinrichtung so eingerichtet ist, dass sie schrittweise einen vorgegebenen Abtastwinkel so überstreicht, dass der Strahl so eingerichtet ist, dass im Wesentlichen der gesamte Querschnitt der Leitung damit überstrichen wird, und
III) Erfassen von Funkeln der Beleuchtung von den Teilchen, wobei Vorhandensein und Position vorhandener Teilchen in der Leitung bestimmt wird.

20. Verfahren nach Anspruch 20, das den Schritt des Festlegens eines Schwelleripegels für Erfassungsrauschen einschließt.

21. Verfahren nach Anspruch 21, wobei der Schwellenwert wenigstens teilweise räumlich definiert wird

22. Verfahren nach Anspruch 21 oder 22, wobei der Schwellenwert wenigstens teilweise zeitlich definiert wird.

23. Verfahren nach einem der Ansprüche 20 bis 23, das den Schritt des Summierens des erfassten Pegels von Funken von der Erfassungseinrichtung an jeder Stufe des Strahls einschließt, wenn auf einer bestimmten Stufe mehr als eine Erfassungseinrichtung vorhanden ist.

24. Verfahren nach einem der Ansprüche 20 bis 24, wobei mit dem Strahl (4) mit einer Rate von 1 bis 20 pro Minute und mit zwischen 20 und 100 zwischen 20 und 100 Stufen von Emissionseinrichtungen (3) pro Überstreichung überstrichen wird.

25. Verfahren nach einem der Ansprüche 20 bis 25, wobei mit dem Strahl (4) zwischen 20 und 100 Emissionseinrichtungs-Stufen pro Überstreichung überstrichen wird.

26. Verfahren nach einem der Ansprüche 20 bis 26, das den Schritt des Korrigierens der Anzeige auf perspektivisch verzerrte Ansicht auf X-Y-Koordinaten einer Leitung (1) einschließt.

## Revendications

1. Appareil pour détecter la présence et la position d'une particule transitoire dans du gaz à l'intérieur d'une canalisation (1), qui comprend
(i) au moins un émetteur (3) d'éclairage (4) aménage pour balayer l'éclairage sur une coupe transversale de la canalisation de l'extérieur de la canalisation, dans lequel l'éclairage est aménagé pour être un faisceau collimaté ; et
(ii) au moins un détecteur (6) aménagé pour détecter la présence et la position d'une étincelle quelconque de l'éclairage issue de n'importe quelle particule dans l'éclairage à mesure que le faisceau est balayé sur la coupe transversale de la canalisation,
dans lequel le détecteur est monté à l'extérieur de la canalisation ; et, à l'extérieur de la zone qui s'étend perpendiculairement depuis la région balayée de la canalisation ; l'angle de visualisation du détecteur est décalé de la perpendiculaire au plan de la coupe transversale balayée et décalé vers le côté de la canalisation, dans lequel le détecteur est synchronisé avec le faisceau émis est l'émetteur est configuré pour être balayé par étapes sur un angle de balayage prédéterminé, de sorte que le faisceau soit aménagé pour être balayé sur essentiellement toute la coupe transversale de la canalisation.

2. Appareil selon la revendication 1, dans lequel le détecteur peut être mis au point sur l'éclairage.

3. Appareil selon la revendication 1 ou la revendication 2, dans lequel est en outre prévu un enregistreur (7) pour toute étincelle détectée dans l'éclairage à mesure que le faisceau (4) est balayé en travers de la canalisation (1).

4. Appareil selon l'une quelconque des revendications précédentes, dans lequel se trouve en outre un ajusteur d'image configuré pour ajuster l'image reçue par le détecteur (7) pour justifier l'image reçue à l'extérieur de la canalisation (1).

5. Appareil selon l'une quelconque des revendications précédentes, dans lequel l'émetteur (3) est un laser.

6. Appareil selon la revendication 5, dans lequel le laser (3) fournir un éclairage à 660 nm.

7. Appareil selon l'une quelconque des revendications précédentes, qui comprend un moteur pas-à-pas (5) pour balayer le faisceau émetteur par étapes en travers d'une canalisation (1).

8. Appareil selon la revendication 7, dans lequel l'émetteur (3) est fixé à un arbre du moteur pas-à-pas (5).

9. Appareil selon l'une quelconque des revendications précédentes, dans lequel le détecteur (6) est une caméra réglée à la longueur d'onde de l'émetteur (3).

10. Appareil selon l'une quelconque des revendications précédentes, qui comprend des moyens pour souiller dans l'appareil un niveau de bruit qui peut avoir tendance à masquer une étincelle détectée.

11. Appareil selon l'une quelconque des revendications précédentes, dans lequel l'enregistreur (7) est un klaxon d'avertissement.

12. Appareil selon l'une quelconque des revendications 1 à 11, qui comprend une boucle de rétroaction pour activer un système de gestion qui peut corriger les performances pour tenir compte d'une défaillance du système d'atténuation.

13. Appareil selon l'une quelconque des revendications précédentes, dans lequel des moyens sont prévus pour corriger la vue en perspective distordue de la canalisation (1) à partir de la sortie du détecteur (6).

14. Appareil selon l'une quelconque des revendications précédentes, dans lequel l'émetteur (3) est placé à l'extérieur de la canalisation (1).

15. Système de canalisation comprenant une canalisation (1), un système d'atténuation (2) au moins en partie à l'intérieur de la canalisation et un appareil pour détecter la présence de particules transitoires dans un gaz à l'intérieur de la canalisation, selon l'une quelconque des revendications précédentes.

16. Système de canalisation selon la revendication 16, dans lequel l'angle de visualisation du détecteur (6) est décalé de la perpendiculaire au plan de la coupe transversale balayée d'au moins 20 °, de préférence 30 ° et mieux encore 40 °.

17. Système de canalisation selon la revendication 16 ou la revendication 17, dans lequel la canalisation (1) comprend une entrée de turbine.

18. Système de canalisation selon la revendication 18, dans lequel l'entrée de turbine est celle d'une turbine productrice d'électricité.

19. Procédé pour détecter la présence et la position d'une particule dans un gaz à l'intérieur d'une canalisation (1), qui comprend les étapes consistant à :
(i) balayer la canalisation avec un faisceau d'éclairage collimaté (4) à partir d'au moins un émetteur (3) d'éclairage sur une coupe transversale de la canalisation,
(ii) utiliser au moins un détecteur (6) pour détecter la présence et la position de n'importe quelle étincelle de l'éclairage provenant de n'importe quelle particule à l'intérieur de l'éclairage à mesure que le faisceau est balayé sur la coupe transversale de la canalisation, où le détecteur est monté à l'extérieur de la canalisation et à l'extérieur de la zone qui s'étend perpendiculairement à la région balayée de la canalisation ; l'angle de visualisation du détecteur est décalé de la perpendiculaire au plan de la coupe transversale balayée et décalé vers le côté de la canalisation, dans lequel le détecteur est synchronisé avec le faisceau émis et l'émetteur est balayé par étapes sur un angle de balayage prédéterminé afin que le faisceau soit balayé sur essentiellement toute la coupe transversale de la canalisation, et
(iii) détecter toute étincelle de l'éclairage issue de la particule afin de déterminer la présence et la position dans la canalisation de toute particule présente.

20. Procédé selon la revendication 20, qui comprend l'étape consistant à établir un niveau de seuil pour détecter un bruit.

21. Procédé selon la revendication 21, dans lequel le seuil est au moins en partie défini dans l'espace.

22. Procédé selon l'une quelconque des revendications 21 ou 22, dans lequel le seuil est au moins en partie temporairement défini.

23. Procédé selon l'une quelconque des revendications 20 à 23, qui comprend l'étape consistant à sommer le niveau d'étincelle détecté par le détecteur à chaque étape du faisceau lorsqu'il y a plus d'une sortie de détecteur à une étape donnée.

24. Procédé selon l'une quelconque des revendications 20 à 24, dans lequel le faisceau (4) est balayé à raison de 1 à 20 par minute, avec 20 à 100 étapes d'émetteur (3) par balayage.

25. Procédé selon l'une quelconque des revendications 20 à 25, dans lequel le faisceau (4) est balayé à raison de 20 à 100 étapes d'émetteur par balayage.

26. Procédé selon l'une quelconque des revendications 20 à 26, qui comprend l'étape de correction de l'affichage de la vue en perspective distordue en coordonnées X-Y d'une canalisation (1).
